(19) Europäisches Patentamt
European Patent Office
Office européen des brevets

(11) **EP 4 510 335 A1**

(12) **EUROPEAN PATENT APPLICATION**
published in accordance with Art. 153(4) EPC

(43) Date of publication:
**19.02.2025 Bulletin 2025/08**

(21) Application number: **23823481.9**

(22) Date of filing: **24.03.2023**

(51) International Patent Classification (IPC):
**H01M 50/231** (2021.01)    **B60K 1/04** (2019.01)
**H01M 50/227** (2021.01)    **H01M 50/233** (2021.01)
**H01M 50/242** (2021.01)    **H01M 50/249** (2021.01)
**H01M 50/271** (2021.01)

(52) Cooperative Patent Classification (CPC):
**B60K 1/04; H01M 50/224; H01M 50/227;**
**H01M 50/231; H01M 50/233; H01M 50/242;**
**H01M 50/249; H01M 50/271;** Y02E 60/10

(86) International application number:
**PCT/JP2023/011988**

(87) International publication number:
**WO 2023/243177 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022  JP 2022097735**
**06.02.2023  JP 2023015895**

(71) Applicant: **JFE Steel Corporation**
**Tokyo 100-0011 (JP)**

(72) Inventors:
• **HIGAI, Kazuhiko**
**Tokyo 100-0011 (JP)**
• **SHIOZAKI, Tsuyoshi**
**Tokyo 100-0011 (JP)**

(74) Representative: **Hoffmann Eitle**
**Patent- und Rechtsanwälte PartmbB**
**Arabellastraße 30**
**81925 München (DE)**

(54) **BATTERY CASE**

(57)    A battery case 1 according to the present invention includes: a battery case lower 3 and a battery case upper 5. The battery case lower 3 includes: a case bottom portion 15; case front-rear side wall portions 17 and case right-left side wall portions 19, which are erected on peripheral edges of the case bottom portion 15; and a case flange portion 21 formed outward at upper ends of the case front-rear side wall portions 17 and the case right-left side wall portions 19 and joined to the battery case upper 5. An inner surface and/or an outer surface of at least one of the case front-rear side wall portions 17, the case right-left side wall portions 19, and the case bottom portion 15 is patched or coated with resin 25, and a reinforcing plate 27 disposed to cover the resin 25 is adhered to the resin 25.

FIG.1

**Description**

Field

The present invention relates to a battery case of an electric automobile.

Background

A battery case of an electric automobile (electric vehicle) needs to have an extremely tough structure in order to prevent damage to an internal battery pack at the time of vehicle collision. Therefore, a large number of battery case cross members are installed inside and outside a battery case main body to improve the stiffness of the battery case. Furthermore, a floor cross member is generally provided on a floor (floor panel) of the vehicle. A load to be input to the battery case can be reduced by increasing the strength of the floor cross member and transmitting a load at the time of side collision to the floor cross member as much as possible.

The floor cross member and the battery case cross member described above are components including a hat-shaped section part made of high strength steel sheets and an aluminum extruded material. A plurality of floor cross members and a plurality of battery case cross members are installed in a vehicle width direction and a length direction. Increasing the number of these components for protecting the battery case reduces space for disposing a battery, and decreases battery mounting capacity. Furthermore, increasing the number of components increases vehicle weight, which causes a decrease in a cruising distance. Thus, an optimal structure for protecting a battery case has been studied.

In prior art documents related to a battery case, for example, Patent Literature 1 discloses a "battery case for an electric motor car". In the "battery case for an electric motor car", high sealing performance can be secured by sealing a housing portion of a battery with a bathtub-shaped tray, which is a bottomed frame body, and a top cover. Furthermore, high collision strength can be secured by a frame disposed so as to surround the entire periphery of the tray.

Furthermore, Patent Literature 2 discloses a "lower tray for a battery case", which includes a plurality of reinforcements and a plurality of stiffened members (stiffeners) coupling adjacent reinforcements. In the "lower tray for a battery case", pressing force acting in a region between adjacent reinforcements is dispersed and transmitted to a plurality of reinforcements via a stiffened member, which reduces stress to be transmitted to one reinforcement. This prevents buckling deformation of the reinforcement, so that deformation of a tray main body can be prevented.

Moreover, Patent Literature 3 discloses a "battery case" including an outer peripheral wall, a reinforcement for reinforcing the outer peripheral wall, and a bottom plate. In the "battery case", in order to enhance durability against a load from a road surface, a sandwich panel obtained by sandwiching an intermediate material made of foamed resin (foam material) between a metal upper plate and a metal lower plate is adopted as the bottom plate. Then, the expansion ratio of the intermediate material is changed in relation to a surrounding wall of a battery module including the outer peripheral wall and the reinforcement. Weight can thus be reduced while the stiffness of the bottom plate is secured.

Citation List

Patent Literature

Patent Literature 1: JP 2021-041783 A
Patent Literature 2: JP 2020-053132 A
Patent Literature 3: JP 2019-091633 A

Summary

Technical Problem

Although the "battery case for an electric motor car" in Patent Literature 1 can secure sufficient strength and sealability, a large number of frames joined to the tray is required in order to maintain necessary strength. An area in which a battery can be housed is remarkably limited to the surface area of the tray. Furthermore, the frames made of metal increase the weight, and decreases electricity consumption.

The "lower tray for a battery case", which is made of metal, in Patent Literature 2 can prevent deformation of the tray main body without any problem in strength. In contrast, the "lower tray for a battery case", which is made of iron, remarkably increases the weight, and, if lightweight metal is used for weight reduction, increases costs. Furthermore, although the "lower tray for a battery case", which is made of resin, can reduce the weight, the lower tray is weak in strength.

In order to prevent deformation of the tray main body, it is necessary to increase the resin thickness or reinforce the tray main body, so that an increase in weight and an increase in cost are unfortunately required.

The "battery case" in Patent Literature 3 uses a bottom plate of the battery case as a sandwich panel, and secures the durability against a load from a road surface. Since foamed resin of the sandwich panel includes a foam body containing foaming gas, however, the foamed resin has a small effective sectional area of resin itself, and has a low shear strength of cohesive failure. For this reason, when large bending deformation occurs in the sandwich panel and shear force is applied to a foamed resin layer, cohesive failure, in which failure occurs inside the foamed resin layer, easily occurs. Consequently, when a load large enough to cause bending deformation is applied from the road surface to the bottom plate of the battery case, the durability cannot be secured. In particular, the battery case is vulnerable to side pole collision (side pole impact) (vehicle side collision (side impact)) from a vehicle side surface, which causes large bending deformation in the bottom plate of the battery case, and an effect of improving the stiffness of the battery case can be hardly expected. Therefore, in order to secure the stiffness of the battery case against vehicle side collision, a large number of metal outer peripheral walls and metal reinforcements for reinforcing the outer peripheral walls are required. There is a problem in reducing weight of the entire battery case. A method of solving these problems by decreasing the expansion ratio is provided, which remarkably increases weight unfortunately. Furthermore, voids containing forming gas decreases the thermal conductivity of the foamed resin. There is a problem in heat dissipation of the battery case. Moreover, injection of foamed resin and baking for foaming are required to be repeated in manufacturing a sandwich panel including foamed resin having partially different expansion ratios. There is also a problem in productivity.

Although many techniques as described above are disclosed for preventing deformation of a battery case at the time of vehicle side collision, these techniques have problems of a significant increase in weight and increase in manufacturing cost and an influence on vehicle design.

The present invention has been made in view of the above-described problems, and an object of thereof is to provide a battery case having higher stiffness/strength than before and excellent vibration-damping properties without requiring a significant increase in weight and increase in manufacturing cost and a change of a vehicle structure for automobile (automotive structure).

Solution to Problem

A battery case according to a first aspect of the present invention includes: a battery case lower having a rectangular shape, mounted below a floor of a vehicle body and configured to store a battery; and a battery case upper disposed to cover an upper surface of the battery case lower, wherein the battery case lower includes: a case bottom portion; case front-rear side wall portions and case right-left side wall portions, which are erected on peripheral edges of the case bottom portion; and a case flange portion formed outward at upper ends of the case front-rear side wall portions and the case right-left side wall portions and joined to the battery case upper, and an inner surface and/or an outer surface of at least one of the case front-rear side wall portions, the case right-left side wall portions, and the case bottom portion is patched or coated with resin, and a reinforcing plate disposed to cover the resin is adhered to the resin.

At least surfaces, opposite to the battery case upper, of the case flange portion formed at the upper ends of the case right-left side wall portions may be patched or coated with the resin, and the reinforcing plate disposed to cover the resin may be adhered to the resin.

A battery case according to a second aspect of the present invention includes: a battery case lower having a rectangular shape, mounted below a floor of a vehicle body and configured to store a battery; and a battery case upper disposed to cover an upper surface of the battery case lower, wherein the battery case lower includes: a case bottom portion; case front-rear side wall portions and case right-left side wall portions, which are erected on peripheral edges of the case bottom portion; and a case flange portion formed outward at upper ends of the case front-rear side wall portions and the case right-left side wall portions and joined to the battery case upper, and at least a surface, opposite to the battery case upper, of the case flange portion formed at the upper ends of the case right-left side wall portion is patched or coated with resin, and a reinforcing plate disposed to cover the resin is adhered to the resin.

The resin may have a thickness of 0.1 to 5 mm, the reinforcing plate may have a thickness of 0.15 to 1.0 mm, and an adhesive strength between the resin and the battery case lower and the reinforcing plate may be 5 MPa or more.

Advantageous Effects of Invention

In a battery case of the present invention, the stiffness of the battery case is improved by providing resin and a reinforcing plate on the inner surface and/or the outer surface of at least one of a case front-rear side wall portion, a case right-left side wall portion, and a case bottom portion. Furthermore, the collision energy absorption property of a case flange portion is improved by providing resin and a reinforcing plate at least on a surface, opposite to the battery case upper, of a case flange portion formed at the upper end of the case right-left side wall portion, so that a load to be input to a side wall portion and a bottom portion of the case can be reduced. Deformation of the battery case at the time of side collision (side impact) can be prevented by enhancing the stiffness/strength of a battery case main body or reducing a load to be input to the battery case main body as described above. Furthermore, this can thin a battery case cross member, and reduce the number of battery case cross members to be installed, which contributes weight reduction and excellent vibration-damping properties. Moreover, the present invention hardly changes the appearance of the battery case, so that the battery mounting volume is not decreased, and vehicle design is not influenced.

Brief Description of Drawings

FIG. 1 illustrates a battery case according to a first embodiment of the present invention. FIG. 1(a) is a perspective view of a battery case lower, and FIGS. 1(b) to 1(e) are cross-sectional views taken along plane A in FIG. 1(a), and illustrate arrangement examples of resin and a reinforcing plate.
FIG. 2 illustrates an overall configuration of the battery case.
FIG. 3 is a cross-sectional view of the battery case and peripheral components in a vehicle width direction, and illustrates application positions of the resin and the reinforcing plate in the example of FIG. 1.
FIG. 4 illustrates a model (conventional model) for evaluating the plane stiffness of a case front-rear side wall portion in a conventional battery case lower and a model (invention model) for evaluating the plane stiffness of a case front-rear side wall portion of a battery case lower in FIG. 1.
FIG. 5 is a graph illustrating a result of evaluating the degrees of plane stiffness of the conventional model and the invention model in FIG. 4.
FIG. 6 illustrates a deformed state of the battery case lower at the time of side collision.
FIG. 7 illustrates another aspect 1 of the battery case according to the first embodiment. FIG. 7(a) is a perspective view of the battery case lower, and FIGS. 7(b) to 7(e) are cross-sectional views taken along plane B in FIG. 7(a), and illustrate arrangement examples of the resin and the reinforcing plate.
FIG. 8 is a cross-sectional view of the battery case and the peripheral components in the vehicle width direction, and illustrates application positions of the resin and the reinforcing plate in the example of FIG. 7.
FIG. 9 illustrates another aspect 2 of the battery case according to the first embodiment. FIG. 9(a) is a perspective view of the battery case lower, and FIGS. 9(b) and 9(c) are cross-sectional views taken along plane C in FIG. 9(a), and illustrate arrangement examples of the resin and the reinforcing plate.
FIG. 10 is a cross-sectional view of the battery case and peripheral components in the vehicle width direction, and illustrates application positions of the resin and the reinforcing plate in the example of FIG. 9.
FIG. 11 illustrates a battery case according to a second embodiment of the present invention. FIG. 11(a) is a perspective view of the battery case lower, and FIG. 11(b) is a cross-sectional view taken along plane D in FIG. 11(a), and illustrates an arrangement example of the resin and the reinforcing plate.
FIG. 12 is a cross-sectional view of the battery case and the peripheral components in the vehicle width direction, and illustrates an application position of the resin and the reinforcing plate in the example of FIG. 11.
FIG. 13 is a graph illustrating a result of Example 3. Description of Embodiments

[First Embodiment]

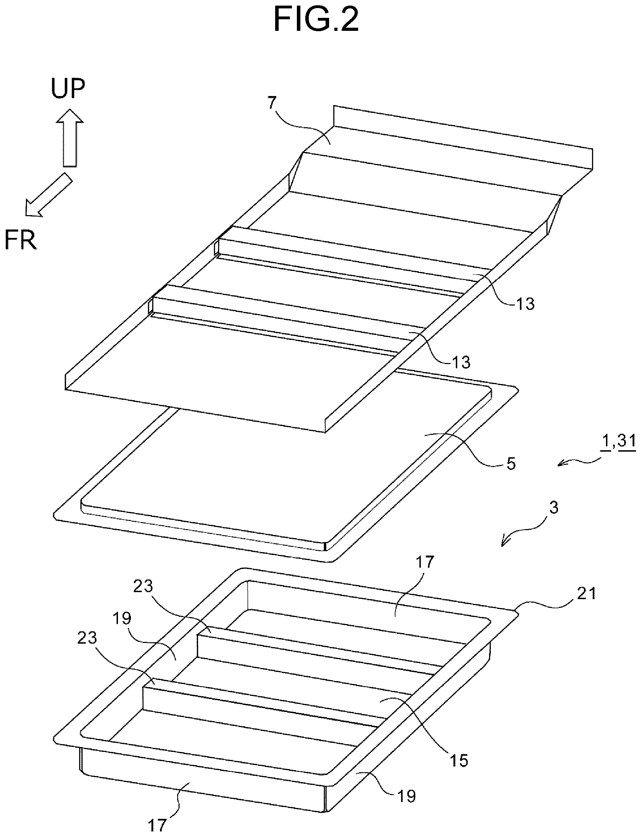

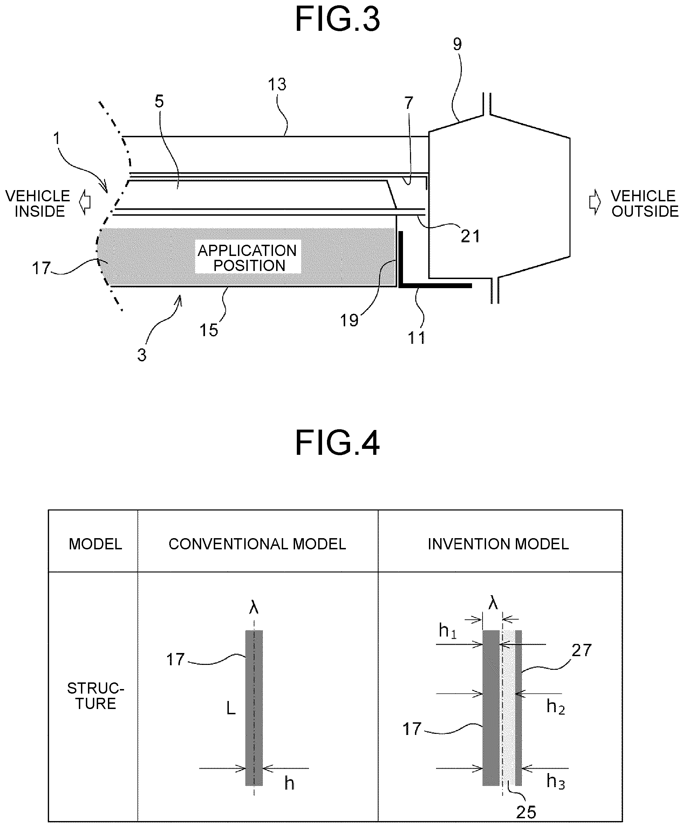

First, FIGS. 2 and 3 illustrate an overall configuration of a battery case 1 according to an embodiment and an arrangement example in a case where the battery case 1 is mounted in a vehicle body. In FIG. 2 and the subsequent figures, an arrow FR indicates the front side of the vehicle body, and an arrow UP indicates the upper side of the vehicle body.

As illustrated in FIGS. 2 and 3, the battery case 1 according to the embodiment includes a battery case lower 3 and a battery case upper 5, and is mounted below a floor 7 of the vehicle body. A pair of side sills 9 arranged so as to extend in a vehicle body front-rear direction are joined to both ends of the floor 7 in the vehicle body width direction. The battery case 1 is fixed to the side sills 9 via fixing components 11 having an L-shaped cross section.

A floor cross member 13 is provided between the above-described pair of side sills 9 over the upper surface of the floor 7. The floor cross member 13 is provided so as to pass over the battery case 1 in the vehicle width direction, and joined to the side sills 9 at both the ends thereof. As illustrated in FIG. 3, the floor cross member 13 protrudes toward both sides in the vehicle width direction more than the battery case 1 above the battery case 1. This causes a load at the time of side collision to be input to the floor cross member 13 before to the battery case 1, which reduces the load to be input to the battery case 1. Each configuration of the battery case 1 will be described in detail below.

<Battery Case Lower>

The battery case lower 3 is a bottomed frame body made of metal (e.g., made of steel plate) including a rectangular case bottom portion 15 and side walls erected on a peripheral edge of the case bottom portion 15, and stores a battery of an electric automobile. A pair of side walls facing in the vehicle front-rear direction among the above-described side walls are referred to as case front-rear side wall portions 17. A pair of side walls facing in the vehicle width direction are referred to as case right-left side wall portions 19. A case flange portion 21 for joining the battery case lower 3 and the battery case upper 5 with each other is formed outward at the upper ends of the case front-rear side wall portions 17 and the case right-left side wall portions 19.

A battery case cross member 23 serving as a stiffened member is provided between the case right-left side wall portions 19 inside the battery case lower 3. A battery case cross member 23 improves the stiffness of the battery case lower 3.

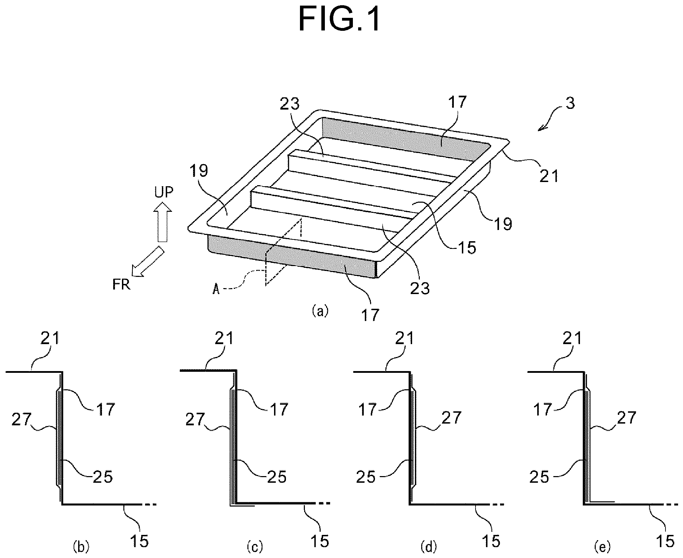

Then, a case front-rear side wall portion 17 (range indicated in gray in FIG. 3) of the battery case lower 3 is patched or coated with resin with a predetermined strength. A reinforcing plate is disposed so as to cover the resin. This point will be described in detail with reference to FIG. 1.

FIG. 1(a) is a perspective view of the battery case lower 3, and illustrates the case front-rear side wall portions 17 in gray. FIGS. 1(b) to 1(e) illustrate arrangement examples in a case where resin 25 and a reinforcing plate 27 are provided on the case front-rear side wall portion 17. The resin 25 may be provided on the outer surface of the case front-rear side wall portion 17 as illustrated in FIGS. 1(b) and 1(c), or may be provided on the inner surface of the case front-rear side wall portion 17 as illustrated in FIGS. 1(d) and 1(e). Furthermore, the case front-rear side wall portion 17 may be patched with preliminarily shaped resin 25 (injection molding resin component). The case front-rear side wall portion 17 may be coated with resin 25 before shaping, and the resin 25 before shaping may be baked.

When the case front-rear side wall portion 17 is coated with the resin 25, the resin 25 has a lower limit of thickness of approximately 0.1 mm. The case front-rear side wall portion 17 can be uniformly coated with the resin 25 having a thickness of approximately 0.1 mm. When the case front-rear side wall portion 17 is patched with film-shaped resin 25, the resin 25 has a lower limit of thickness of approximately 20 $\mu$m. Furthermore, the resin 25 preferably has an upper limit of thickness of approximately 5 mm from the viewpoint of cost. A method for determining a resin thickness based on the viewpoints of weight reduction and stiffness improvement of the battery case will be described later.

The reinforcing plate 27 provided so as to cover the resin 25 adheres to the resin 25 at a predetermined strength, prevents the resin 25 from delamination (peeling) off the case front-rear side wall portion 17, and improves the plane stiffness of the case front-rear side wall portion 17 in cooperation with the resin 25 as described later. Improvement in the plane stiffness of the case front-rear side wall portion 17 improves the stiffness of the battery case lower 3. The plane stiffness will be described later. The reinforcing plate 27 may be fixed to the case front-rear side wall portion 17 by spot welding at the upper and lower ends thereof as illustrated in FIGS. 1(b) and 1(d). The reinforcing plate 27 may be fixed to the case bottom portion 15 on the lower end side thereof as illustrated in FIGS. 1(c) and 1(e). When the lower end is fixed to the case bottom portion 15, a range in which the resin can adhere can be widened.

Since the effect of improvement in the plane stiffness caused by the resin 25 and the reinforcing plate 27 does not greatly depend on the tensile strength of a material of the reinforcing plate 27, the reinforcing plate 27 may have a tensile strength lower than that of a material of the battery case lower 3, and have a tensile strength of 270 to 590 MPa-class from the viewpoint of a reduction in manufacturing cost. Furthermore, the reinforcing plate 27 is only required to prevent the resin 25 from delamination off the case front-rear side wall portion 17 of the battery case lower 3, so that the reinforcing plate 27 may have a thickness smaller than that of the material of the battery case lower 3. For example, a steel plate having a thickness of 0.15 to 1 mm is preferably used from the viewpoints of weight reduction and a reduction in manufacturing cost.

The tensile strength of 270 to 590 MPa-class is adopted since a usually used steel plate has the lowest tensile strength of 270 MPa-class and a steel plate having a tensile strength of more than 590 MPa-class greatly increases cost. In particular, an inexpensive and general cold rolled steel sheet called common steel (common carbon steel) such as JIS standard SPCC and a plated steel sheet having a grade of 270 MPa-class (so-called mild steel) within the range are preferably used from the aspect of cost. Furthermore, the steel thickness of 0.15 to 1 mm is preferably used since a steel thickness of less than 0.15 mm increases manufacturing cost, and a steel thickness of more than 1 mm decreases weight reduction effect.

Since a conventional general battery case is made of only a metal plate, increasing the thickness of the metal plate is necessary for enhancing strength and stiffness, which increases weight. In this regard, although the battery case 1 of the embodiment apparently has a large plate thickness since the resin 25 and the reinforcing plate 27 are provided on the case front-rear side wall portion 17, the weight thereof does not easily increase as compared to that in a conventional case where a metal plate has a large thickness since the resin 25 having a lower density than the metal is used.

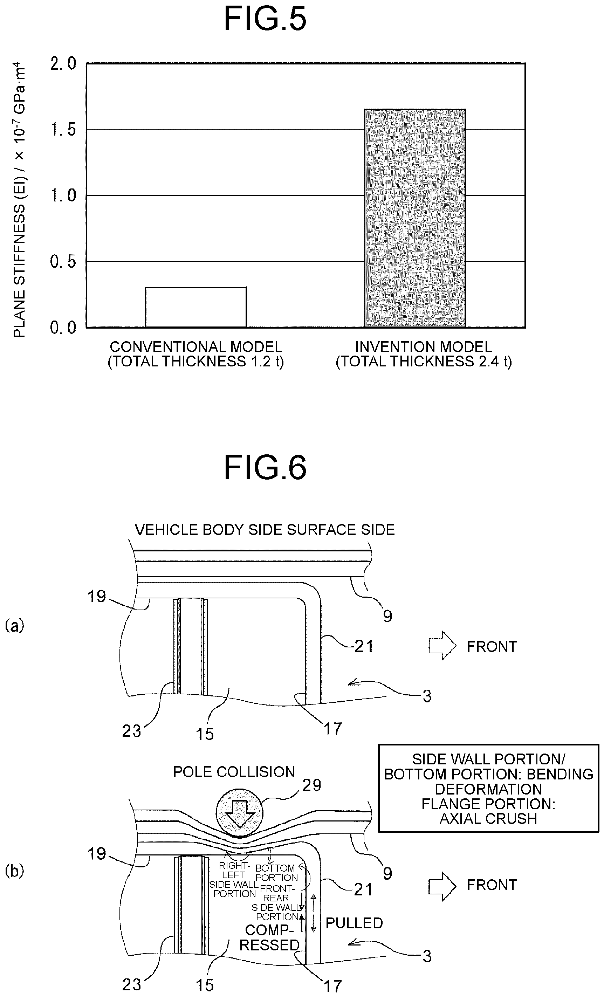

Then, a sandwich structure (laminate structure including three layers) in which the resin 25 is sandwiched between the case front-rear side wall portion 17 of the battery case lower 3 made of metal and the reinforcing plate 27 improves the plane stiffness of the case front-rear side wall portion 17. The plane stiffness is a yield strength against bending deformation in the case front-rear side wall portion 17, that is, the maximum load that can withstand a load input from an end of the case front-rear side wall portion 17 in an in-place direction without buckling deformation. This point will be described with reference to FIGS. 4 and 5.

FIG. 4 illustrates a conventional model for evaluating the plane stiffness of the case front-rear side wall portion 17 of a conventional battery case lower and an invention model for evaluating the plane stiffness of the case front-rear side wall portion 17 of the battery case lower 3 in the embodiment. The conventional model includes only steel plates. The invention model has a sandwich structure in which the resin 25 is sandwiched between the case front-rear side wall portion 17 and the reinforcing plate 27. In FIG. 4, parts corresponding to those in FIG. 1 are denoted by the same reference signs.

The plane stiffness in a case where only steel plates are included as in the conventional model is generally given by a product EI of Young's modulus E of a material and the geometrical moment of inertia I. In contrast, plane stiffness EI in the case of the sandwich structure as in the invention model can be determined by using Expression (1) below.

$$EI = \frac{L}{3} \sum_{i=1}^{n} E_i \{(h_i - \lambda)^3 - (h_{i-1} - \lambda)^3\} \quad \cdot \cdot \cdot (1)$$

In Expression (1) above, L represents a width of a laminated body, i represents a material, n represents the number of layers, $E_i$ represents Young's modulus of the material i, $h_i$ represents the thickness from a material of i = 1 to a layer of the material i, and $\lambda$ represents the distance from the surface of the material of i = 1 to the neutral plane of the laminated body.

The conventional model and the invention model having substantially the same weight in FIG. 4 are compared with each other to find a difference between degrees of plane stiffness EI thereof. FIG. 5 illustrates the result. In FIG. 5, the thickness of a case front-rear side wall portion of the conventional model is set to 1.2 t (total thickness 1.2 t). The thickness of a case front-rear side wall portion of the invention model is set to 0.6 t. The thickness of resin is set to 1.5 t. The thickness of a reinforcing plate is set to 0.3 t (total thickness 2.4 t). The plane stiffness EI of each model is calculated by using Expression (1). In both the models in FIG. 5, the weight ratio of the invention model is 0.97 in a case where the weight of the conventional model is set as a reference (1.00).

As illustrated in FIG. 5, the plane stiffness ($1.65 \times 10^{-7}$ Gpa·m$^4$) of the invention model is improved to 5.3 times of that of the conventional model ($0.31 \times 10^{-7}$ GPa·m$^4$). In this manner, the total thickness of a portion is made thicker than that of the conventional model by providing resin having a lower density and lower Young's modulus than metal and the reinforcing plate 27 while the plate thickness of the case front-rear side wall portion 17 is made thinner than that of the conventional model. The plane stiffness can thereby be remarkably increased even with weight substantially equal to that of the conventional model. For example, when a buckling load determined by Expression (2) to be described later is used as an index representing yield strength, the buckling load is proportional to the plane stiffness ($E \times I$), so that the yield strength against bending deformation increases in proportion to the plane stiffness.

Next, a point that improvement in the plane stiffness of the case front-rear side wall portion 17 of the battery case lower 3 improves the stiffness of the battery case 1 will be described with reference to FIG. 6. FIG. 6 illustrates a deformed state of the battery case lower 3 in a case where a side surface of the vehicle body collides with a pole 29. FIG. 6(a) illustrates a state before the collision with the pole 29 in plan view. FIG. 6(b) illustrates a state before the collision with the pole 29 in plan view. Although other components such as the battery case upper 5, the floor 7, and the floor cross member 13 are provided above the battery case lower 3 in an actual vehicle body, these components are not illustrated in FIG. 6.

When a left side surface of the vehicle body collides with the pole 29 as illustrated in FIG. 6(b), the bending moment arises on a case front-rear side wall portion 17, a case right-left side wall portion 19, and the case bottom portion 15 of the battery case lower 3 as indicated by curved arrows in the figure. For example, the bending moment arising on the case front-rear side wall portion 17 causes bending deformation in which the inner surface side of the case front-rear side wall portion 17 is compressed and the outer surface side thereof is pulled as indicated by black arrows in the figure. Therefore, improving the plane stiffness of the case front-rear side wall portion 17 by providing the resin 25 and the reinforcing plate 27 on the case front-rear side wall portion 17 improves the yield strength against the bending deformation as described above. The shape of the case front-rear side wall portion 17 can thereby be maintained without buckling deformation even at the time of side collision. This can enhance the stiffness and strength of the battery case 1 itself, and prevent deformation.

The case front-rear side wall portion 17, the resin 25, and the reinforcing plate 27 integrally receive a load, which effectively improves the plane stiffness. The case front-rear side wall portion 17 and the resin 25 and the resin 25 and the reinforcing plate 27 are required to adhere to each other at a predetermined strength. This point will be described in a specific example.

When the case front-rear side wall portion 17 has a plate thickness of 1.0 mm, the resin 25 has a thickness of 1.0 mm, and the reinforcing plate 27 has a thickness of 0.6 mm, the plane stiffness EI is $2.72 \times 10^{-7}$ GPa·m$^4$ if the case front-rear side wall portion 17 and the resin 25 and the resin 25 and the reinforcing plate 27 adhere to each other. The above-described plane stiffness is calculated by setting Young's modulus of iron to 206 GPa and Young's modulus of the resin 25 to 2 GPa. When the resin 25 and the reinforcing plate 27 do not adhere to each other, the plane stiffness EI of the case front-rear side wall portion 17 and the resin 25, which adhere to each other, is $0.19 \times 10^{-7}$ GPa·m⁴, and the plane stiffness EI of the reinforcing plate 27 alone is $0.04 \times 10^{-7}$ GPa·m⁴. Therefore, the plane stiffness adds up to $0.23 \times 10^{-7}$ GPa·m⁴ as a whole. The plane stiffness is remarkably lower than that in a case where the resin 25 and the reinforcing plate 27 adhere to each other. Therefore, it is important that the case front-rear side wall portion 17 and the resin 25 adhere to each other with a sufficient strength and the resin 25 and the reinforcing plate 27 adhere to each other with a sufficient strength so that the case front-rear side wall portion 17, the resin 25, and the reinforcing plate 27 can integrally receive a load.

An adhesive strength is preferably 5 MPa or more, for example. Even when bending deformation occurs in the case front-rear side wall portion 17, the adhesive strength of 5 MPa or more prevents the resin 25 from delamination off the case front-rear side wall portion 17 as long as the bending deformation is within a range of up to approximately 90°. The above-described adhesive strength is measured based on "ADHESIVE - TESTING METHOD FOR TENSILE SHEAR/-ADHESIVE STRENGTH OF STIFF MATERIAL TO ADHERE" of JIS K 6850. The maximum shear stress or average shear stress, parallel to an adhesive surface, acting on the interface between the metal plate and the resin can be determined as the adhesive strength. In the adhesive strength (tensile shear adhesive strength) measured by JIS K 6850, failure modes of interface delamination (failure at joining interface between resin and material to adhere) and cohesive failure (failure inside resin) are not distinguished. Therefore, even when any of the interface delamination or the cohesive failure occurs, stress at that time is evaluated as adhesive strength. Therefore, for example, in a case of resin that undergoes cohesive failure due to a small load, such as foamed resin, 5 MPa cannot be secured as adhesive strength. Thus, any of, for example, epoxy, modified epoxy, urethane, modified urethane, acryl, and modified acryl, which do not easily undergo cohesive failure, is preferably adopted as resin in the present invention.

<Method of Determining Resin Thickness>

Although the present invention does not limit the thickness of the resin 25 of the battery case 1, the resin 25 having a too small thickness may decrease the effect of improvement in the plane stiffness of the case front-rear side wall portion 17 while the resin 25 having a too large thickness may decrease the effect of weight reduction. Therefore, the resin thickness is preferably determined in consideration of the balance therebetween. An example of such a method of determining a resin thickness will be described below.

First, a metal battery case lower 3 serving as a base for study is prepared. The weight and the plane stiffness of the case front-rear side wall portion 17 are determined. The battery case lower 3 is hereinafter referred to as <<Base>>. Next, two metal battery case lowers 3 having a smaller plate thickness than <<Base>> above are prepared. The battery case lowers 3 are hereinafter referred to as <<Sample A>> and <<Sample B>>.

<<Sample A>> and <<Sample B>> have the same plate thickness.

First, in <<Sample A>>, the resin 25 and the reinforcing plate 27 are provided on the case front-rear side wall portion 17 as illustrated in FIG. 1(b), for example. In the case, the resin thickness is adjusted so that the plane stiffness of the case front-rear side wall portion 17 is substantially the same as the plane stiffness of <<Base>>. This causes <<Sample A>> to maximize the effect of weight reduction by using the resin 25 having a lower density than metal while securing the plane stiffness substantially the same as that of <<Base>>.

Furthermore, in <<Sample B>>, the resin 25 and the reinforcing plate 27 are provided on the case front-rear side wall portion 17 in arrangement similar to that of <<Sample A>>. In the case, the resin thickness is adjusted so that <<Sample B>> including the resin 25 and the reinforcing plate 27 has weight substantially the same as that of <<Base>>. <<Sample B>> maximizes the effect of improvement in the plane stiffness by increasing the resin thickness of the resin 25 having a low density up to weight substantially the same as that of <<Base>>.

The resin thickness can be determined by setting, as a lower limit value, a resin thickness of <<Sample A>>, which can maximally reduce weight without decreasing the plane stiffness as compared to that of <<Base>>, and setting, as an upper limit value, a resin thickness of <<Sample B>>, which can maximally improve the plane stiffness without increasing the weight as compared to that of <<Base>>. Two effects of weight reduction and plane stiffness improvement can be preferably exhibited by setting the resin thickness within the above-described range.

Although an example in which the resin 25 and the reinforcing plate 27 are provided on the case front-rear side wall portion 17 of the battery case lower 3 has been described above, the present invention is not limited thereto. The bending moment arises also on the case right-left side wall portion 19 and the case bottom portion 15 to cause bending deformation as described with reference to FIG. 6. Yield strength against the bending deformation may be enhanced by improving the degrees plane stiffness of the case right-left side wall portion 19 and the case bottom portion 15. Another aspect of the embodiment as described above will be described below.

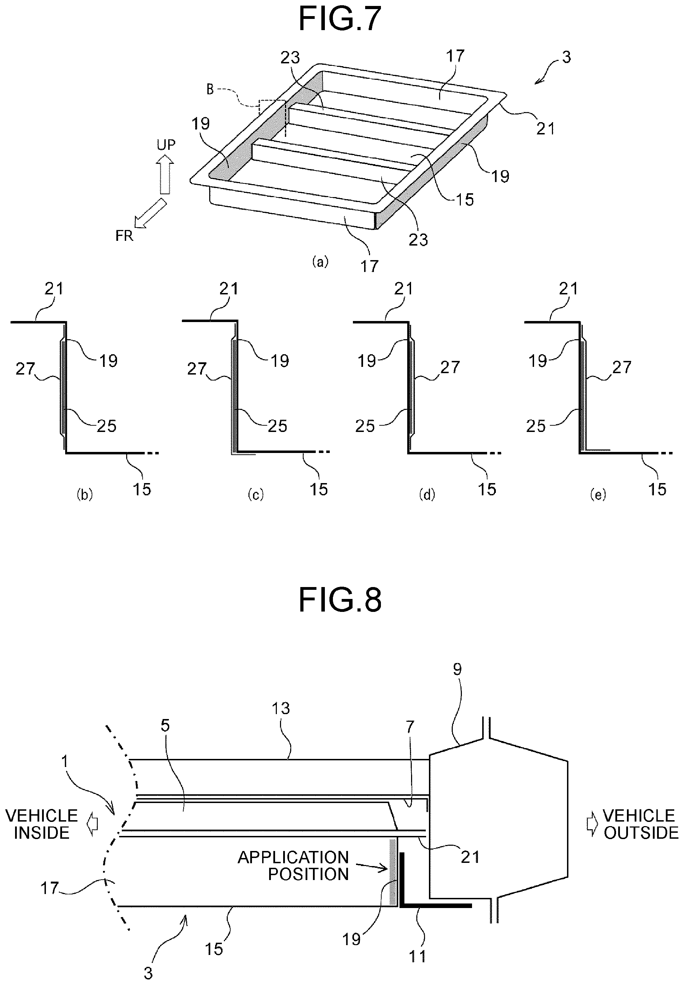

FIGS. 7(a) and 8 illustrate, in gray, application positions in a case where the resin 25 and the reinforcing plate 27 are provided on the case right-left side wall portion 19. Furthermore, FIGS. 7(b) to 7(e) illustrate examples of arrangement of the resin 25 and the reinforcing plate 27 in that case. Also in this case, as in the example of FIG. 1, the plane stiffness of the case right-left side wall portion 19 can be improved by disposing the reinforcing plate 27 so as to cover the resin 25 while patching or coating the inner surface or the outer surface of the case right-left side wall portion 19 with the resin 25.

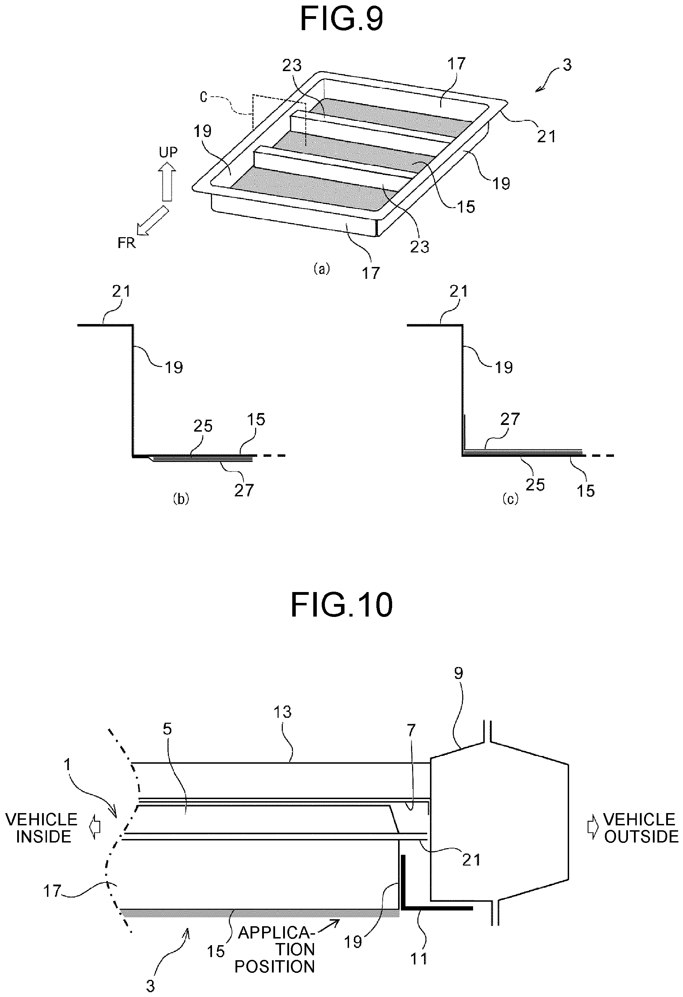

Furthermore, FIGS. 9(a) and 10 illustrate, in gray, application positions in a case where the resin 25 and the reinforcing plate 27 are provided on the case bottom portion 15. Furthermore, FIGS. 9(b) and 9(c) illustrate examples of arrangement of the resin 25 and the reinforcing plate 27 in that case. Also in this case, as in the other examples, the plane stiffness of the case bottom portion 15 can be improved by disposing the reinforcing plate 27 so as to cover the resin 25 while patching or coating the inner surface or the outer surface of the case bottom portion 15 with the resin 25. Also in these other aspects, the thickness of the resin 25, the thickness and tensile strength of the reinforcing plate 27, the adhesive strength, and the like are similar to those in the above-described embodiment.

As described above, according to the embodiment, the weight of the battery case 1 can be reduced while the deformation of the battery case 1 at the time of side collision is inhibited more than before by improvement in the stiffness of the battery case lower 3. Furthermore, the battery case cross member 23 serving as a stiffened member of the battery case 1 is thinned and the number of battery case cross members 23 to be installed is reduced by improvement of the stiffness of the battery case 1 itself. Further weight reduction can thereby be expected. Furthermore, in the embodiment, the appearance of the battery case 1 hardly changes, so that the degree of freedom in vehicle design does not decrease, and the battery mounting volume does not decrease, either. The embodiment can also improve vibration-damping properties. This point will be specifically described in Example 1 to be described later.

Although, in the above-described embodiment, an example in which the resin 25 and the reinforcing plate 27 are provided on any of the inner surfaces or the outer surfaces of the case front-rear side wall portion 17, the case right-left side wall portion 19, and the case bottom portion 15 of the battery case lower 3 has been described, the present invention is not limited thereto. The resin 25 and the reinforcing plate 27 may be provided on each of the inner surface and the outer surface of the case front-rear side wall portion 17, the case right-left side wall portion 19, or the case bottom portion 15. Furthermore, the resin 25 and the reinforcing plate 27 are required to be provided on at least one of the case front-rear side wall portion 17, the case right-left side wall portion 19, and the case bottom portion 15. The resin 25 and the reinforcing plate 27 may be provided on two or all thereof.

[Second Embodiment]

In the above-described first embodiment, the resin 25 and the reinforcing plate 27 are provided on the case front-rear side wall portion 17, the case right-left side wall portion 19, and the case bottom portion 15 of the battery case lower 3. This enhances the plane stiffness of the portion, and improves the stiffness of the battery case 1, so that deformation is prevented. In the embodiment, an example will be described in which the collision energy absorption property (EA) of the case flange portion 21 is improved by providing the resin 25 and the reinforcing plate 27 on the case flange portion 21 of the battery case lower 3 to prevent deformation of the battery case 1.

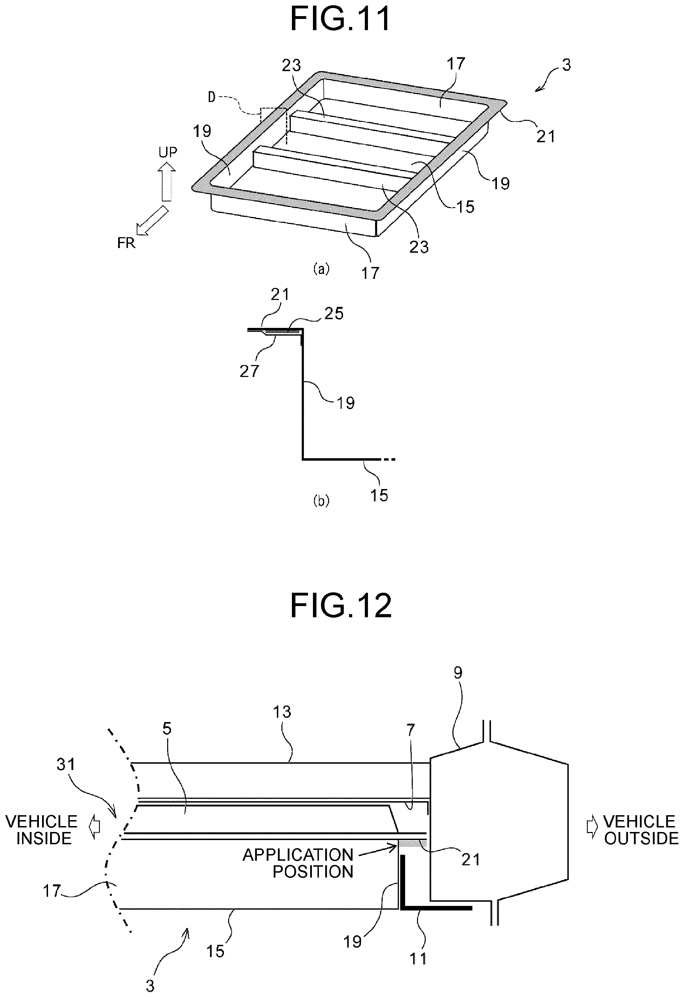

A battery case 31 of the embodiment includes members similar to those described in the first embodiment, and differs only in the position where the resin 25 and the reinforcing plate 27 are provided. Therefore, the members are denoted by the same reference signs as those in the first embodiment to omit description thereof. In the embodiment, the position where the resin 25 and the reinforcing plate 27 are provided will be described with reference to FIGS. 11 and 12.

In the battery case 31 of the embodiment, the resin 25 and the reinforcing plate 27 are provided on the case flange portion 21 (portion indicated in gray in FIGS. 11(a) and 12) of the battery case lower 3. Specifically, as illustrated in FIG. 11(b), the lower surface (surface opposite to battery case upper) of the case flange portion 21 is patched or coated with the resin 25, and the reinforcing plate 27 disposed so as to cover the resin 25 adheres to the resin 25.

Since the upper surface of the case flange portion 21 is a portion joined to a flange portion of the battery case upper 5 (see FIG. 12), the resin 25 and the reinforcing plate 27 provided on the upper surface of the case flange portion 21 may decrease the sealing performance of the battery case 1. Therefore, when the resin 25 and the reinforcing plate 27 are provided on the case flange portion 21, the resin 25 and the reinforcing plate 27 are provided only on the lower surface of the case flange portion 21. Furthermore, even in a case where the resin 25 is provided on the lower surface of the case flange portion 21, spot welding on the upper surface by causing an end of the reinforcing plate 27 covering the resin 25 to come around from the lower surface of the case flange portion 21 to the upper surface is not desirable from the viewpoint of the above-described sealing performance. Therefore, as illustrated in FIG. 11(b), an end of the reinforcing plate 27 is preferably fixed to the lower surface of the case flange portion 21 or the case right-left side wall portion 19.

The collision energy absorption property of the case flange portion 21 at the time of side collision can be improved by providing the resin 25 and the reinforcing plate 27 on the case flange portion 21 as described above. This point will be described in detail below.

The case flange portion 21 is used for joining the battery case upper 5 and the battery case lower 3 with each other. As illustrated in FIG. 6(b), the case flange portion 21 has a function of axially crushing at the time of a collision on the side surface of the vehicle and absorbing collision energy by the axial crush. Specifically, the case flange portion 21 absorbs collision energy by repeatedly undergoing buckling deformation in a bellows-shaped manner and axially crushing at the time when a collision load is input. A crack (fracture) in a bent portion as a result of buckling deformation in a process of the axial crush remarkably reduces the collision energy absorption effect. Therefore, the collision energy absorption property of the case flange portion 21 can be improved by preventing the case flange portion 21 from fracturing at the time of axial crush.

In this regard, the resin adheres to the lower surface of the case flange portion 21 in the battery case 31 of the embodiment, so that the resin is sandwiched between metal plates in the bellows-shaped bent portion at the time when the case flange portion 21 undergoes the buckling deformation in the bellows-shaped manner. This increases the bending radius of the bent portion, which prevents crack from easily occurring.

Although the case flange portion 21 is formed over the entire periphery of the edge of the battery case lower 3, axial crush easily occurs at a portion formed at the upper end of the case right-left side wall portion 19 at the time of side collision (see FIG. 6(b)). Therefore, the collision energy absorption property at the time of side collision can be improved by providing the resin 25 and the reinforcing plate 27 at least on the lower surface of the case flange portion 21 formed at the upper end of the case right-left side wall portion 19.

In the first embodiment, it has been described that the adhesive strength of 5 MPa or more of the resin 25 prevents the resin from delamination as long as the bending radius is up to approximately 90°. In the embodiment, resin is provided on a portion to axially crush, so that the adhesive strength is preferably further increased. For example, 10 MPa or more of the adhesive strength between the resin 25 and the case flange portion 21 and that between the resin 25 and the reinforcing plate 27 are effective since the adhesive strengths prevents the resin 25 from delamination even at the time when the case flange portion 21 axially crushes.

As described above, according to the embodiment, the collision energy absorption property of the case flange portion 21 can be improved by providing the resin 25 and the reinforcing plate 27 on the lower surface of the case flange portion 21. Improvement in the collision energy absorption property of the case flange portion 21 reduces a load to be input to other portions of the battery case lower 3, so that deformation of the battery case 31 can be prevented. As in the first embodiment, this enables the battery case 31 and the battery case cross member 23 to be thinned, and weight reduction thereof can be expected. Furthermore, also in the embodiment, the appearance of the battery case 31 hardly changes, so that the degree of freedom in vehicle design does not decrease, and the battery mounting volume does not decrease, either. Moreover, the embodiment can also improve vibration-damping properties. This point will be specifically described in Example 2 to be described later.

The resin 25 and the reinforcing plate 27 may be provided in both the portion described in the first embodiment and the portion described in a second embodiment. That is, the resin 25 and the reinforcing plate 27 may be provided on at least one of the inner surfaces or the outer surfaces of the case front-rear side wall portion 17, the case right-left side wall portion 19, and the case bottom portion 15 of the battery case lower 3. The resin 25 and the reinforcing plate 27 may be also provided on the lower surface of the case flange portion 21. This can reduce a load to be input to the front-rear side wall portion and the like of the battery case lower 3, and improve the stiffness of the battery case lower 3, so that the deformation of the battery case can be further prevented.

[Example 1]

A specific study was conducted to evaluate the function and effect of the battery case 1 described in the first embodiment, and the result will be described. In the example, degrees of plane stiffness in a case where the resin and the reinforcing plate were applied to the case front-rear side wall portion 17, the case right-left side wall portion 19, or the case bottom portion 15 were calculated as indices for evaluating stiffness (yield strength until start of deformation) (Invention Examples 1 to 5). Furthermore, in order to perform comparison with the stiffness of a conventional battery case, the plane stiffness of a battery case including only steel plates was calculated, and the comparison was conducted (Comparative Example 1).

Furthermore, in order to evaluate vibration characteristics in the invention examples and the comparative example, test specimens of $100 \times 300$ mm (resin range of $100 \times 250$ mm in case of invention examples) were prepared, and impact vibration tests using an impact hammer were performed. In an impact vibration test, an acceleration sensor was attached to each of the vicinities of edges on the side, where resin is not provided, of thick plates (members corresponding to battery case) of the suspended test specimens. Each of the vicinities of edges on the opposite side (side where resin was provided) was impacted and vibrated with the impact hammer. Then, impact force obtained from the impact hammer and acceleration measured by the acceleration sensor were taken into a fast Fourier transform (FFT) analyzer, and a frequency response function of Accelerance $(m/s^2/N)$ was calculated. The frequency response function was determined by performing processing of averaging five impact test results.

Table 1 illustrates details of the invention examples and the comparative example, the above-described calculated degrees of plane stiffness, and results of the impact vibration tests.

Table 1

| | Reinforced position | Battery case | | Resin | Reinforcing plate | | Arrangement of resin/reinforcing plate | Weight /kg | Plane stiffness $\times 10^{-7}$ GPa·m$^4$ | Vibration damping Accelerance (200 Hz) |
|---|---|---|---|---|---|---|---|---|---|---|
| | | Strength /MPa | Plate thickness /mm | Thickness /mm | Strength /MPa | Thickness /mm | | | | |
| Invention Example 1 | Front-rear side wall portion | 440 | 1.0 | 2.0 | 270 | 0.4 | FIG. 1(b) | 24.0 | 4.6 | 3 |
| Invention Example 2 | Front-rear side wall portion | 440 | 1.0 | 2.0 | 270 | 0.4 | FIG. 1(e) | 24.2 | 4.6 | 3 |
| Invention Example 3 | Right-left side wall portion | 440 | 1.0 | 1.0 | 270 | 0.4 | FIG. 7(c) | 24.2 | 1.9 | 5 |
| Invention Example 4 | Right-left side wall portion | 440 | 1.0 | 1.0 | 270 | 0.4 | FIG. 7(d) | 24.5 | 1.9 | 5 |
| Invention Example 5 | Bottom portion | 440 | 0.8 | 2.0 | 270 | 0.2 | FIG. 9(b) | 28.2 | 2.2 | 7 |
| Comparative Example 1 | - | 440 | 1.4 | - | - | - | - | 31.7 | 0.5 | 300 |

"Weight" in Table 1 is the weight of the entire battery case lower 3 in a case where the resin and the reinforcing plate are provided in the arrangement indicated in "Arrangement of resin/reinforcing plate" on a portion indicated in "Reinforced position". "Plane stiffness" was calculated based on a calculation expression of Expression (1) above. Furthermore, "Vibration damping" is a value of Accelerance at a frequency of 200 Hz obtained by the impact vibration test.

In Comparative Example 1, a structure including only steel plates was adopted. The battery case lower 3 includes steel plates having a tensile strength of 440 MPa and a thickness of 1.4 mm. As illustrated in Table 1, in Comparative Example 1, the weight was 31.7 kg, the plane stiffness of each portion was $0.5 \times 10^{-7}$ GPa·m$^4$, and Accelerance at 200 Hz obtained in the impact test was 300 m/s$^2$/N.

In Invention Example 1, the battery case lower 3 includes steel plates having a tensile strength of 440 MPa and a thickness of 1.0 mm. As illustrated in FIG. 1(b), the resin 25 having a thickness of 2 mm and the reinforcing plate 27, which was a steel plate having a tensile strength of 270 MPa and a thickness of 0.4 mm, were provided on the case front-rear side wall portion 17. In this case, the weight was 24.0 kg, the plane stiffness of the case front-rear side wall portion 17 was $4.6 \times 10^{-7}$ GPa·m$^4$, and Accelerance at 200 Hz obtained in the impact test was 3 m/s$^2$/N. In the example, the weight was reduced by 7.7 kg (weight reduction rate of 24.3%) as compared to that in Comparative Example 1 while the plane stiffness of the case front-rear side wall portion 17 was improved by 9.2 times, and vibration was successfully inhibited to 1/100.

As illustrated in FIG. 1(e), in Invention Example 2, the resin 25 and the reinforcing plate 27 were provided, and other conditions are the same as those in Invention Example 1. In this case, the weight was 24.2 kg, the plane stiffness of the case front-rear side wall portion 17 was $4.6 \times 10^{-7}$ GPa·m$^4$, and Accelerance at 200 Hz obtained in the impact test was 3 m/s$^2$/N. In the example, the weight was reduced by 7.5 kg (weight reduction rate of 23.7%) as compared to that in Comparative Example 1 while the plane stiffness of the case front-rear side wall portion 17 was improved by 9.2 times, and vibration was successfully inhibited to 1/100.

In Invention Example 3, the battery case lower 3 includes steel plates having a tensile strength of 440 MPa and a thickness of 1.0 mm. As illustrated in FIG. 7(c), the resin 25 having a thickness of 1 mm and the reinforcing plate 27, which was a steel plate having a tensile strength of 270 MPa and a thickness of 0.4 mm, were provided on the case right-left side wall portion 19. In this case, the weight was 24.2 kg, the plane stiffness of the case right-left side wall portion 19 was $1.9 \times 10^{-7}$ GPa·m$^4$, and Accelerance at 200 Hz obtained in the impact test was 5 m/s$^2$/N. In the example, the weight was reduced by 7.5 kg (weight reduction rate of 23.7%) as compared to that in Comparative Example 1 while the plane stiffness of the case right-left side wall portion 19 was improved by 3.9 times, and vibration was successfully inhibited to 1/60.

As illustrated in FIG. 7(d), in Invention Example 4, the resin 25 and the reinforcing plate 27 were provided, and other conditions are the same as those in Invention Example 3. In this case, the weight was 24.5 kg, the plane stiffness of the case right-left side wall portion 19 was $1.9 \times 10^{-7}$ GPa·m$^4$, and Accelerance at 200 Hz obtained in the impact test was 5 m/s$^2$/N. In the example, the weight was reduced by 7.2 kg (weight reduction rate of 22.7%) as compared to that in Comparative Example 1 while the plane stiffness of the case right-left side wall portion 19 was improved by 3.9 times, and vibration was successfully inhibited to 1/60.

In Invention Example 5, the battery case lower 3 includes steel plates having a tensile strength of 440 MPa and a thickness of 0.8 mm. As illustrated in FIG. 9(d), the resin 25 having a thickness of 2 mm and the reinforcing plate 27, which was a steel plate having a tensile strength of 270 MPa and a thickness of 0.2 mm, were provided on the case bottom portion 15. In this case, the weight was 28.2 kg, the plane stiffness of the case bottom portion 15 was $2.2 \times 10^{-7}$ GPa·m$^4$, and Accelerance at 200 Hz obtained in the impact test was 7 m/s$^2$/N. In the example, the weight was reduced by 3.5 kg (weight reduction rate of 11.0%) as compared to that in Comparative Example 1 while the plane stiffness of the case bottom portion was improved by 4.5 times, and vibration was successfully inhibited to 1/43.

As described above, in Invention Examples 1 to 5, the weight was reduced as compared to that in Comparative Example 1 while the plane stiffness and vibration-damping properties of a portion where the resin 25 and the reinforcing plate 27 were provided were greatly improved. Improvement in the plane stiffness of at least one of the case front-rear side wall portion 17, the case right-left side wall portion 19, and the case bottom portion 15 of the battery case lower 3 improves the stiffness of the battery case lower 3 itself, so that deformation of the battery case 1 can be inhibited.

[Example 2]

A specific study was conducted to evaluate the function and effect of the battery case 31 described in the second embodiment, and the result will be described. In the example, buckling loads in a case where the resin 25 and the reinforcing plate 27 were applied on the case flange portion 21 were calculated as indices for evaluating the collision energy absorption property (EA) (Invention Examples 6 and 7). Furthermore, in order to perform comparison with the collision energy absorption property of a conventional battery case, comparison was conducted by calculating a buckling load of a battery case including only steel plates (Comparative Example 2). Also in the example, plane stiffness was calculated as in Example 1, and impact vibration tests were conducted.

Table 2 illustrates details of the invention examples and the comparative example, the buckling load and the degrees of plane stiffness calculated above, and results of the impact vibration tests.

Table 2

| | Reinforced position | Battery case | | Resin | Reinforcing plate | | Arrangement of resin/reinforcing plate | Weight /kg | Plane stiffness $\times 10^{-7}$ GPa·m$^4$ | **Buckling** load $\times 10^{-10}$ N | Vibration damping Accelerance (200 Hz) |
| | | Strength /MPa | Plate thickness /mm | Thickness /mm | Strength /MPa | Thickness /mm | | | | | |
|---|---|---|---|---|---|---|---|---|---|---|---|
| Invention Example 6 | Flange portion | 440 | 1.0 | 2.0 | 270 | 0.4 | FIG. 11(b) | 24.1 | 4.6 | 2.81 | 3 |
| Invention Example 7 | Front-rear side wall portion Right-left side wall portion Flange portion | 440 | 0.8 | 1.0 | 270 | 0.4 | FIG. 1(b) FIG. 7(b) FIG. 11(b) | 22.5 | 1.5 | 0.94 | 10 |
| Comparative Example 2 | - | 440 | 1.4 | - | - | - | - | 31.7 | 0.5 | 0.30 | 300 |

A method of calculating "Weight", "Plane stiffness", and "Vibration damping" in Table 2 is similar to that in Example 1. "Buckling load" was calculated based on Expression (2) below.

$$Pcr = C \times \pi^2 \times E \times I/l^2 \qquad\qquad (2)$$

Pcr: buckling load [N]
C: coefficient of fixity
E: Young's modulus [GPa]
I: second moment of area [$m^4$]
l: effective length of column [m]
C = 0.25, E $\times$ I = value of "plane stiffness", and l = 0.02.

In Comparative Example 2, a structure includes only steel plates. The same conditions as those in Comparative Example 1 in Table 1 are adopted. In Comparative Example 2, as in Comparative Example 1, the weight was 31.7 kg, the plane stiffness of each portion was $0.5 \times 10^{-7}$ GPa $\cdot m^4$, Accelerance at 200 Hz obtained in the impact test was 300 m/s$^2$/N, and the buckling load was $0.3 \times 10^{-10}$ N.

In Invention Example 6, the battery case lower 3 includes steel plates having a tensile strength of 440 MPa and a thickness of 1.0 mm. As illustrated in FIG. 11(b), the resin 25 having a thickness of 2 mm and the reinforcing plate 27, which was a steel plate having a tensile strength of 270 MPa and a thickness of 0.4 mm, were provided on the entire periphery of the lower surface of the case flange portion 21. In this case, the weight was 24.1 kg, the plane stiffness of the case flange portion 21 was $4.6 \times 10^{-7}$ GPa $\cdot m^4$, the buckling load was $2.81 \times 10^{-10}$ N, and Accelerance at 200 Hz obtained in the impact test was 3 m/s$^2$/N. In the example, the buckling load of the case flange portion 21 was improved as compared to that in Comparative Example 2. Furthermore, in the example, the weight was reduced by 7.6 kg (weight reduction rate of 24.0%) as compared to that in Comparative Example 2 while the plane stiffness of the case flange portion 21 was improved by 9.2 times, and vibration was successfully inhibited to 1/100.

In Invention Example 7, the battery case lower 3 includes steel plates having a tensile strength of 440 MPa and a thickness of 0.8 mm. As illustrated in FIG. 11(b), the resin 25 having a thickness of 1 mm and the reinforcing plate 27, which was a steel plate having a tensile strength of 270 MPa and a thickness of 0.4 mm, were provided on the entire periphery of the lower surface of the case flange portion 21. Furthermore, as illustrated in FIGS. 1(b) and 7(b), the resin 25 and the reinforcing plate 27 were provided also on the case front-rear side wall portion 17 and the case right-left side wall portion 19. In this case, the weight was 22.5 kg, the plane stiffness of a portion where the resin 25 and the reinforcing plate 27 were provided was $1.5 \times 10^{-7}$ GPa$\cdot m^4$, the buckling load was $0.94 \times 10^{-10}$ N, and Accelerance at 200 Hz obtained in the impact test was 10 m/s$^2$/N. In the example, the buckling load of the portion where the resin 25 was provided was improved while the plane stiffness was improved by three times as compared to that in Comparative Example 2. Therefore, the collision energy absorption property of the case flange portion 21 is improved while the stiffness of the battery case lower 3 is also improved. The example is effective when the effect of preventing deformation of the battery case is desired to be enhanced. Also in this case, the weight was reduced by 9.2 kg (weight reduction rate of 29.0%) as compared to that in Comparative Example 2 while vibration was successfully inhibited to 1/30.

As described above, in Invention Examples 6 and 7, the weight was reduced as compared to that in Comparative Example 2 while the plane stiffness, the buckling load, and the vibration-damping properties of a portion where the resin 25 and the reinforcing plate 27 were provided were greatly improved. Improvement in the buckling load of the case flange portion 21 of the battery case lower 3 improves the energy absorption property of the case flange portion 21, which can reduce a load to be input to other portions of the battery case lower 3, and inhibit deformation of the battery case. Furthermore, the stiffness of the battery case lower 3 itself is also improved by providing the resin 25 and the reinforcing plate 27 on at least one of the case front-rear side wall portion 17, the case right-left side wall portion 19, and the case bottom portion 15 in addition to the case flange portion 21, so that deformation of the battery case can be further inhibited.

[Example 3]

As illustrated in Examples 1 and 2, the stiffness of the battery case lower 3 and the energy absorption property of the case flange portion 21 are improved by applying the present invention, so that deformation of the battery case can be inhibited. Then, in order to maximize the above-described effects, as described in the embodiment, the resin 25 is preferably prevented from delamination off the battery case lower 3 and the reinforcing plate 27 in a process of deformation. Therefore, in the present invention, the resin 25 has a preferred adhesive strength of 5 MPa or more.

Thus, in the example, the effect obtained by setting the adhesive strength of the resin 25 to 5 MPa or more was confirmed, and the result will be described.

In the example, an intrusion amount (offset amount) of the pole into the battery case lower (pole intrusion amount, amount of deformation of case right-left side wall portion 19 of battery case lower) in a case where the side surface of the vehicle body collides with the pole (see FIG. 6) was evaluated by collision analysis using a finite element method. The pole collided with the side surface of the vehicle body at an impact speed of 32 km/h in a direction perpendicular to the vehicle front-rear direction. In each of the examples, the battery case lower 3 included steel plates having a tensile strength of 440 MPa and a thickness of 1.0 mm. The resin 25 had a thickness of 2 mm. The reinforcing plate 27 is a steel plate having a tensile strength of 270 MPa and a thickness of 0.4 mm. Table 3 illustrates the positions reinforced by the resin 25 and adhesive strengths in invention examples and comparative examples and results of intrusion amounts of the pole into the battery case lower.

Table 3

| | First example | | | | Second example | | Pole offset amount (mm) |
|---|---|---|---|---|---|---|---|
| | Front-rear side wall portion | Right-left side wall portion | Bottom portion | Adhesive strength (Mpa) | Frange portion | Adhesive strength (Mpa) | |
| Invention Example 8 | OFIG. 1(c) | - | - | 7.9 | - | - | 12.4 |
| Invention Example 9 | - | OFIG. 7(c) | - | 6.5 | - | - | 15.9 |
| Invention Example 10 | - | - | ○FIG. 9(c) | 5.4 | - | - | 21.2 |
| Invention Example 11 | - | - | - | - | OFIG. 11(b) | 11.4 | 22.9 |
| Invention Example 12 | OFIG. 1(c) | OFIG. 7(c) | ○FIG. 9(c) | 6.8 | OFIG. 11(b) | 11.6 | 0.0 |
| Comparative Example 3 | - | - | - | | - | - | 30.0 |
| Comparative Example 4 | OFIG. 1(c) | - | - | 3.6 | - | - | 28.5 |
| Comparative Example 5 | - | OFIG. 7(c) | - | 4.9 | - | - | 28.8 |
| Comparative Example 6 | - | - | OFIG. 9(c) | 3.0 | - | - | 29.3 |
| Comparative Example 7 | - | - | - | - | OFIG. 11(b) | 4.9 | 29.4 |
| Comparative Example 8 | OFIG. 1(c) | OFIG. 7(c) | OFIG. 9(c) | 4.6 | OFIG. 11(b) | 4.6 | 26.0 |

In Comparative Example 3, the battery case lower 3 includes only steel plates. As illustrated in Table 3, a pole intrusion amount in Comparative Example 3 was 30.0 mm. In Comparative Example 4, as illustrated in FIG. 1(c), the resin 25 and the reinforcing plate 27 were provided on the case front-rear side wall portion 17. Then, the adhesive strength between the resin 25 and the battery case lower 3 and the reinforcing plate 27 was set to 3.6 Mpa outside a preferred range (< 5MPa). In this case, the pole intrusion amount was 28.5 mm, and an improvement amount from Comparative Example 3 was 1.5 mm (5.0%).

In contrast, in Invention Example 8, the resin 25 and the reinforcing plate 27 were provided at the same places as that in Comparative Example 4, and the adhesive strength was set to 7.9 MPa within the preferred range ($\geq$ 5 MPa). In this case, the pole intrusion amount was 12.4 mm, and the improvement amount from Comparative Example 3 was 17.6 mm (58.8%). The improvement amount from Comparative Example 3 was increased by approximately 12 times of that in Comparative Example 4 by setting the adhesive strength to 5 MPa or more, and the pole intrusion amount was successfully and greatly reduced.

In Comparative Example 5, as illustrated in FIG. 7(c), the resin 25 and the reinforcing plate 27 were provided on the case right-left side wall portion 19. Then, the adhesive strength between the resin 25 and the battery case lower 3 and the reinforcing plate 27 was set to 4.9 Mpa outside the preferred range (< 5MPa). In this case, the pole intrusion amount was 28.8 mm, and the improvement amount from Comparative Example 3 was 1.2 mm (4.0%).

In contrast, in Invention Example 9, the resin 25 and the reinforcing plate 27 were provided at the same places as that in Comparative Example 5, and the adhesive strength was set to 6.5 MPa within the preferred range ($\geq$ 5 MPa). In this case, the pole intrusion amount was 15.9 mm, and the improvement amount from Comparative Example 3 was 14.1 mm (47.1%). The pole intrusion amount was successfully and significantly reduced as compared to that in Comparative Example 5 with the same reinforced portion by setting the adhesive strength to 5 MPa or more.

In Comparative Example 6, as illustrated in FIG. 9(c), the resin 25 and the reinforcing plate 27 were provided on the case bottom portion 15. Then, the adhesive strength between the resin 25 and the battery case lower 3 and the reinforcing plate 27 was set to 3.0 Mpa outside the preferred range (< 5MPa). In this case, the pole intrusion amount was 29.3 mm, and the improvement amount from Comparative Example 3 was 0.7 mm (2.5%).

In contrast, in Invention Example 10, the resin 25 and the reinforcing plate 27 were provided at the same places as that in Comparative Example 6, and the adhesive strength was set to 5.4 MPa within the preferred range ($\geq$ 5 MPa). In this case, the pole intrusion amount was 21.2 mm, and the improvement amount from Comparative Example 3 was 8.8 mm (29.4%). The pole intrusion amount was successfully and significantly reduced as compared to that in Comparative Example 6 with the same reinforced portion by setting the adhesive strength to 5 MPa or more.

In Comparative Example 7, as illustrated in FIG. 11(b), the resin 25 and the reinforcing plate 27 were provided on the entire periphery of the lower surface of the case flange portion 21. Then, the adhesive strength between the resin 25 and the battery case lower 3 and the reinforcing plate 27 was set to 4.9 Mpa outside the preferred range (< 5MPa). In this case, the pole intrusion amount was 29.4 mm, and the improvement amount from Comparative Example 3 was 0.6 mm (2.0%).

In contrast, in Invention Example 11, the resin 25 and the reinforcing plate 27 were provided at the same places as that in Comparative Example 7, and the adhesive strength was set to 11.4 MPa within the preferred range ($\geq$ 5 MPa). In this case, the pole intrusion amount was 22.9 mm, and the improvement amount from Comparative Example 3 was 7.1 mm (23.5%). The pole intrusion amount was successfully and significantly reduced as compared to that in Comparative Example 7 with the same reinforced portion by setting the adhesive strength to 5 MPa or more.

In Comparative Example 8, the resin 25 and the reinforcing plate 27 were provided at an adhesive strength of 4.6 MPa outside the preferred range (< 5MPa) on the case front-rear side wall portion 17 (FIG. 1(c)), the case right-left side wall portion 19 (FIG. 7(c)), the case bottom portion 15 (FIG. 9(c)), and the entire periphery of the lower surface of the case flange portion 21 (FIG. 11(b)). In this case, the pole intrusion amount was 26.0 mm, and the improvement amount from Comparative Example 3 was 4.0 mm (13.4%).

In contrast, in Invention Example 12, the resin 25 and the reinforcing plate 27 were provided at an adhesive strength of 11.6 MPa on the same portion as that in Comparative Example 8. In this case, the pole intrusion amount was 0.0 mm, and the improvement amount from Comparative Example 3 was 30.0 mm (100.0%). The pole intrusion amount was successfully and significantly reduced as compared to that in Comparative Example 12 with the same reinforced portion by setting the adhesive strength to 5 MPa or more.

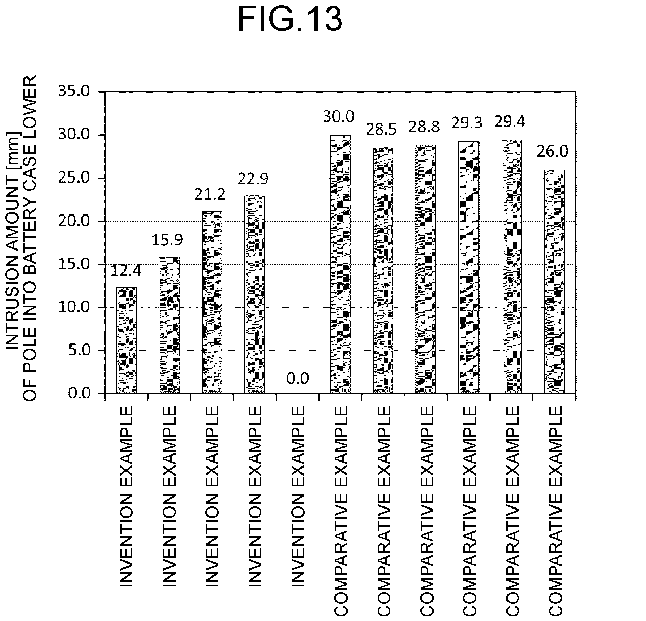

FIG. 13 graphically illustrates intrusion amounts of the pole into the battery case lower in Invention Examples 8 to 12 and Comparative Examples 3 to 8 above. Setting the adhesive strength to 5 MPa or more thus prevents the resin 25 from delamination off each reinforced position of the battery case lower and the reinforcing plate 27 even when bending deformation occurs, and a large degree of plane stiffness or energy absorption property can be maintained. It was successfully demonstrated that deformation of the battery case can be reduced.

Industrial Applicability

According to the present invention, it is possible to provide a battery case having higher stiffness/strength than before and excellent vibration-damping properties without requiring a significant increase in weight and increase in manufacturing cost and a change of a vehicle structure for automobile.

Reference Signs List

1    BATTERY CASE (FIRST EMBODIMENT)

3    BATTERY CASE LOWER

5    BATTERY CASE UPPER

7    FLOOR

9    SIDE SILL

11   FIXING COMPONENT

13   FLOOR CROSS MEMBER

15   CASE BOTTOM PORTION

17   CASE FRONT-REAR SIDE WALL PORTION

19   CASE RIGHT-LEFT SIDE WALL PORTION

21   CASE FLANGE PORTION

23   BATTERY CASE CROSS MEMBER

25   RESIN

27   REINFORCING PLATE

29   POLE

31   BATTERY CASE (SECOND EMBODIMENT)

**Claims**

1.  A battery case comprising:

    a battery case lower having a rectangular shape, mounted below a floor of a vehicle body and configured to store a battery; and
    a battery case upper disposed to cover an upper surface of the battery case lower,
    wherein the battery case lower includes:

        a case bottom portion;
        case front-rear side wall portions and case right-left side wall portions, which are erected on peripheral edges of the case bottom portion; and
        a case flange portion formed outward at upper ends of the case front-rear side wall portions and the case right-left side wall portions and joined to the battery case upper, and

    an inner surface and/or an outer surface of at least one of the case front-rear side wall portions, the case right-left side wall portions, and the case bottom portion is patched or coated with resin, and a reinforcing plate disposed to cover the resin is adhered to the resin.

2.  The battery case according to claim 1, wherein at least surfaces, opposite to the battery case upper, of the case flange portion formed at the upper ends of the case right-left side wall portions are patched or coated with the resin and the reinforcing plate disposed to cover the resin is adhered to the resin.

3.  A battery case comprising:

    a battery case lower having a rectangular shape, mounted below a floor of a vehicle body and configured to store a battery; and
    a battery case upper disposed to cover an upper surface of the battery case lower,
    wherein the battery case lower includes:

        a case bottom portion;
        case front-rear side wall portions and case right-left side wall portions, which are erected on peripheral edges of the case bottom portion; and
        a case flange portion formed outward at upper ends of the case front-rear side wall portions and the case right-left side wall portions and joined to the battery case upper, and

at least a surface, opposite to the battery case upper, of the case flange portion formed at the upper ends of the case right-left side wall portion is patched or coated with resin, and a reinforcing plate disposed to cover the resin is adhered to the resin.

4. The battery case according to any one of claims 1 to 3, wherein the resin has a thickness of 0.1 to 5 mm, the reinforcing plate has a thickness of 0.15 to 1.0 mm, and an adhesive strength between the resin and the battery case lower and the reinforcing plate is 5 MPa or more.

# FIG.1

(a)

(b)   (c)   (d)   (e)

# FIG.2

UP

FR

7

13

13

5

1,31

3

23

19

23

17

21

15

19

17

# FIG.3

# FIG.4

| MODEL | CONVENTIONAL MODEL | INVENTION MODEL |
|---|---|---|
| STRUC-TURE | | |

# FIG.5

PLANE STIFFNESS (EI) / × 10⁻⁷ GPa·m⁴

CONVENTIONAL MODEL
(TOTAL THICKNESS 1.2 t)

INVENTION MODEL
(TOTAL THICKNESS 2.4 t)

# FIG.6

VEHICLE BODY SIDE SURFACE SIDE

(a)

FRONT

(b)

POLE COLLISION

FRONT

SIDE WALL PORTION/
BOTTOM PORTION: BENDING
DEFORMATION
FLANGE PORTION:
AXIAL CRUSH

# FIG.7

(a)

(b)    (c)    (d)    (e)

# FIG.8

# FIG.9

(a)

(b)

(c)

# FIG.10

VEHICLE INSIDE

VEHICLE OUTSIDE

APPLICA-TION POSITION

# FIG.11

(a)

(b)

# FIG.12

VEHICLE INSIDE

APPLICATION POSITION

VEHICLE OUTSIDE

# FIG.13

## INTERNATIONAL SEARCH REPORT

International application No.

**PCT/JP2023/011988**

### A. CLASSIFICATION OF SUBJECT MATTER

***H01M 50/231***(2021.01)i; ***B60K 1/04***(2019.01)i; ***H01M 50/227***(2021.01)i; ***H01M 50/233***(2021.01)i; ***H01M 50/242***(2021.01)i; ***H01M 50/249***(2021.01)i; ***H01M 50/271***(2021.01)i

FI: H01M50/231; B60K1/04 Z; H01M50/227; H01M50/233; H01M50/242; H01M50/249; H01M50/271 B

According to International Patent Classification (IPC) or to both national classification and IPC

### B. FIELDS SEARCHED

Minimum documentation searched (classification system followed by classification symbols)

H01M50/231; B60K1/04; H01M50/227; H01M50/233; H01M50/242; H01M50/249; H01M50/271

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2013-201112 A (HYUNDAI MOTOR CO.) 03 October 2013 (2013-10-03) paragraphs [0002], [0003], [0024]-[0027], [0031], fig. 1, 3-5 | 1-3 |
| X | CN 112874285 A (BYD COMPANY LTD.) 01 June 2021 (2021-06-01) paragraphs [0002], [0068], fig. 5, 11 | 1 |
| A | CN 208000948 U (CHANGZHOU PRIDE NEW ENERGY CELL TECHNOLOGY CO., LTD.) 23 October 2018 (2018-10-23) | 1-4 |
| A | JP 10-006785 A (NISSAN MOTOR CO., LTD.) 13 January 1998 (1998-01-13) | 1-4 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 June 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/011988**

| Patent document cited in search report | | | Publication date (day/month/year) | Patent family member(s) | Publication date (day/month/year) |
|---|---|---|---|---|---|
| JP | 2013-201112 | A | 03 October 2013 | US 2013/0252059 A1 paragraphs [0004]-[0007], [0075]-[0084], [0098]-[0099], fig. 1, 3-5 US 2014/0352886 A1 DE 102012213308 A1 KR 10-1315741 B1 CN 103325963 A | |
| CN | 112874285 | A | 01 June 2021 | US 2023/0023909 A1 paragraphs [0003], [0100], fig. 5, 11 WO 2021/103867 A1 EP 4056408 A1 KR 10-2022-0087529 A | |
| CN | 208000948 | U | 23 October 2018 | (Family: none) | |
| JP | 10-006785 | A | 13 January 1998 | (Family: none) | |

Form PCT/ISA/210 (patent family annex) (January 2015)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021041783 A
- JP 2020053132 A

- JP 2019091633 A